# FASCICULE DE BREVET EUROPEEN

(11) **EP 0 361 208 B1**
(45) Date de publication et mention de la délivrance du brevet: **12.05.1993**
(21) Numéro de dépôt: 89116904.7
(22) Date de dépôt: 13.09.1989
(51) Int. Cl.: E02B 9/04, E03B 11/00, E03B 3/04

(54) **Dispositif de prise d'eau**
Wasserentnahmevorrichtung
Water intake device

(30) Priorité: 28.09.1988 LU 87349; 06.03.1989 LU 87468
(43) Date de publication de la demande: 04.04.1990
(73) Titulaire: PAUL WURTH S.A., 1122 Luxembourg (LU); S.E.B.E.S. (SYNDICAT DES EAUX DU BARRAGE D'ESCH-SUR-SURE), Esch-sur-Sure (LU)
(72) Inventeur: Hansen, Guy, L-9650 Esch sur Sûre (LU); Petry, Rudy, L-2446 Howald (LU)
(74) Mandataire: Freylinger, Ernest T.

(56) Documents cités:
- CA-A- 1 012 841
- FR-A- 2 098 967
- PATENT ABSTRACTS OF JAPAN, vol. 9, no. 117 (M-381)[1840], 22 mai 1985; & JP-A-60 3314 (MIZOTA KOGYO K.K.) 09-01-1985
- PATENT ABSTRACTS OF JAPAN, vol. 8, no. 174 (M-316)[1611], 10 août 1984; & JP-A-59 68 416 (SATOU TETSUKOU K.K.) 18-04-1984

## Description

La présente invention concerne un dispositif de prise d'eau dans un réservoir d'eau naturel ou artificiel, notamment dans le réservoir d'un barrage en vue de la production d'eau potable, comprenant un tube de prise d'eau muni, à une extrémité, d'une crépine d'aspiration et, à l'autre extrémité, d'une branche transversale de façon que ledit tube de prise d'eau ait sensiblement la forme d'un "T", des paliers qui sont solidaires d'une structure portante fixe installée dans le réservoir, lesdits paliers supportant la branches transversale du tube de façon que ce dernier puisse pivoter autour d'un axe horizontal O défini par lesdits paliers, un raccord articulé solidaire d'une des deux extrémités de ladite branche transversale pour relier le tube de prise d'eau à une conduite d'évacuation de l'eau, des moyens d'entraînement pour faire pivoter le tube et modifier le niveau de prise d'eau par la crépine.

Les crépines d'aspiration pour la prise d'eau potable dans le réservoir d'un barrage sont généralement fixées sur le côté amont du mur de la digue à l'extrémité d'une conduite traversant le fond de cette digue et reliées, du côté aval, à une station de pompage. Un tel emplacement présente, toutefois, plusieurs inconvénients. D'abord, la crépine est difficilement accessible en vue de l'entretien et du nettoyage qu'elle nécessite de temps en temps. En outre, la prise d'eau à proximité immédiate de la digue du barrage n'est pas un positionnement idéal, à cause des impuretés et déchets qui s'y accumulent. Par ailleurs, l'emplacement fixe de la crépine d'aspiration ne permet pas de tenir compte des fluctuations de la qualité de l'eau. On a, en effet, constaté que la qualité de l'eau peut varier suivant les saisons et suivant le niveau de profondeur. Par exemple, les algues qui s'étalent généralement en nappes remontent ou descendent suivant les saisons.

Un dispositif qui est muni d'une prise d'eau à niveau variable est connu par le document JP-A-603 314. Il s'agit plus précisément d'un dispositif de prise d'eau dans un réservoir d'un barrage qui a une première prise d'eau solidaire d'un corps flottant sur le plan d'eau du réservoir (c'est-à-dire une prise d'eau à profondeur d'immersion fixe) et une deuxième prise d'eau dont la profondeur d'immersion peut être ajustée. A cet effet, le dispositif du document JP-A-603 314 est muni d'un tube qui est raccordé avec une de ses extrémités à l'aide d'un raccord articulé sur une conduite immergée, de façon à pouvoir pivoter autour d'un axe horizontal. L'extrémité libre de ce tube, qui constitue la deuxième prise d'eau à profondeur d'immersion variable, est reliée par un câble à un treuil installé sur ledit corps flottant. En faisant actionner le treuil, on peut ainsi modifier le niveau auquel la prise d'eau est effectuée.

Pour l'homme de l'art, il est cependant évident que la solution du treuil installé sur un corps flottant n'est pas sans inconvénients. En effet, ce corps flottant est directement soumis aux aléas climatiques et notamment aux mouvements et au gel du plan d'eau du réservoir. De plus, le niveau de prise d'eau varie, lorsque le niveau du plan d'eau dans le réservoir varie. D'autres inconvénients d'un corps flottant supportant un treuil sont par exemple, l'aspect esthétique lorsque la région dans lequel le réservoir d'eau se situe est exploitée touristiquement, et le risque de sabotage qui n'est pas non plus à négliger.

Le but de la présente invention est de prévoir un nouveau dispositif de prise d'eau qui permet d'ajuster le niveau de prise d'eau en fonction de la qualité de l'eau et qui ne présente pas les inconvénients susmentionnés.

Ce but est atteint par un dispositif de prise d'eau, tel que défini dans le préambule, qui est caractérisé en ce que ledit dispositif de prise d'eau composé dudit tube, desdits paliers, dudit raccord articulé et desdits moyens d'entraînement, est entièrement immergé dans ledit réservoir d'eau et en ce que lesdits moyens d'entraînement sont actionnés à l'eau.

Selon un mode de réalisation le pivotement du tube de prise d'eau est engendré par un vérin monté sur la charpente et actionné à l'aide de l'eau sous pression, prélevée par le tube et sous la commande d'une vanne magnétique dans un poste de commande installe au sec à côté dur réservoir.

Ce mode de réalisation présente l'avantage qu'il permet l'installation du poste de commande au sec à côté du réservoir d'eau et qui, de ce fait, est moins dangereux et plus facile d'accès et qu'il n'est pas tributaire des aléas climatiques, comme par exemple le gel du plan d'eau.

Le tube est, de préférence, prolongé, au-delà de son axe de pivotement, par un poids d'équilibrage, permettant au tube d'être en équilibre autour de son axe de pivotement, de sorte qu'il suffit au vérin de vaincre les forces dynamiques et les frottements.

La position du tube peut être déterminée à l'aide de capteurs de pression. Cette mesure se fait, de préférence, de manière différentielle grâce à un premier capteur de pression monté sur le tube à proximité de la crépine et un second capteur de pression monté sur la charpente.

Un dispositif de prélèvement d'échantillons de l'eau recueillie permet une analyse permanente dans la station de commande en vue d'actionner le vérin pour assurer une position optimale de la crépine d'aspiration.

D'autres particularités et caractéristiques ressortiront de la description détaillée d'un mode de réalisation avantageux, présenté ci-dessous, à titre d'illustration, en référence aux figures annexées dans lesquelles:
la figure 1 est une vue schématique latérale d'un mode de réalisation d'un dispositif de prise d'eau selon la présente invention et
la figure 2 représente schématiquement une coupe longitudinale à travers le tube de prise d'eau de la figure 1.

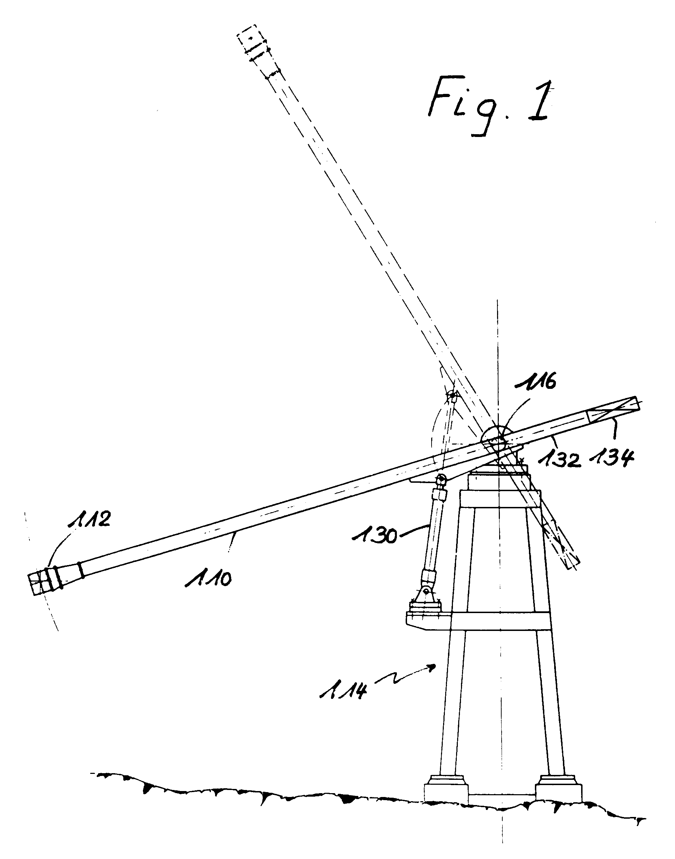

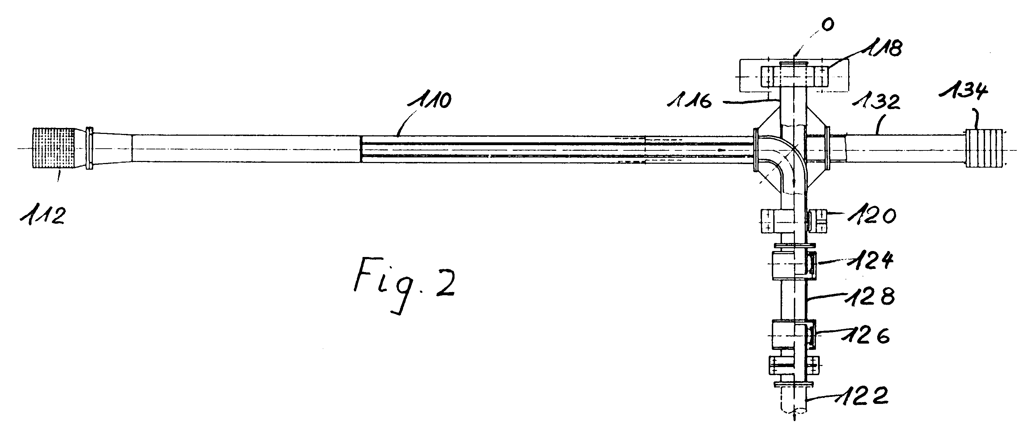

Les figures 1 et 2 montrent un tube 110 de prise d'eau pourvu, à son extrémité libre, d'une crépine d'aspiration 112 et monté, par son extrémité opposée, de façon pivotante, sur une charpente afin de pouvoir être déplacé entre les positions extrêmes supérieure et inférieure montrées en traits interrompus sur la fig.1.

Dans le mode de réalisation représenté sur les figures 1 et 2 la charpente est totalement immergée alors qu'un poste de commande non représenté est installé au sec à côté du réservoir d'eau. Dans l'exemple réprésente, la charpente est constitué par un trépied 114 réalisé par une construction tubulaire soudée en acier inoxydable, comprenant des trous d'aération pour éviter une force ascensionnelle. La console 114 est essentiellement constitué de plusieurs pieds ancrés solidement dans des fondations en béton à une distance de l'ordre d'une centaine de mètres en amont de la digue d'un barrage non représenté.

Comme représenté sur la figure 4, le tube 110 se présente sous forme d'un "T" dont la branche transversale 116 est logée horizontalement dans deux paliers 118, 120 fixés au sommet de la console 114. Le tube 110 peut donc pivoter autour de l'axe horizontal O de sa branche transversale 116 pour occuper toutes positions voulues entre les positions angulaires extrêmes représentées sur la figure 3.

La branche transversale 116 du tube 110 est reliée à une conduite fixe 122 d'évacuation de l'eau récoltée à travers la crépine 112 et le tube 110. Cette conduite 122 dirige l'eau vers une station de traitement et d'épuration, éventuellement à travers d'une station de pompage. La section pivotante 116 est connectée à la conduite fixe par l'intermédiaire de deux raccords tournants 124, 126 à rotule sphérique prévus de part et d'autre d'une section flottante 128 de manière à permettre des déplacements axiaux et radiaux relatifs entre la section pivotante 116 et la conduite fixe 122.

Aussi bien les paliers 118 et 120, ainsi que les raccords 124 et 126 comportent des coquilles en matière synthétique ou en bronze qui permettent des rotations ou pivotements sans nécessité de lubrification.

Le pivotement du tube 110 est engendré à l'aide d'un vérin 130 monté sur la console 114 et dont le fluide hydraulique est avantageusement de l'eau prélevée par le tube 110 à travers la conduite 122. Si le dispositif est associe à une station de pompage pour évacuer l'eau vers une station de traitement, l'eau a, en outre, la pression requise pour actionner le vérin 130. La commande du vérin 130 est effectuée à travers des conduites non-représentées, reliées par le fond du réservoir d'eau au poste de commande se trouvant à côté de la surface d'eau. Le réglage du débit d'eau actionnant le vérin 130 est effectué à l'aide d'une vanne magnétique.

Le tube 110 est, de préférence, prolongé au-delà de la section transversale 116 par une section 132 pourvue d'un poids 134 d'équilibrage du reste du tube 110 de manière que celui-ci se trouve en équilibre autour de son axe de pivotement. De cette manière, le vérin 130 n'aura qu'à vaincre les forces dynamiques et celles occasionnées par le frottement au niveau des paliers et des raccords.

La commande du vérin 130 est effectuée par un opérateur en fonction des résultats d'analyse de l'eau de manière à placer la crépine 112 au niveau correspondant à la qualité optimale de l'eau. A cet effet, la conduite d'évacuation 122 est associée à un système de prise d'échantillon pour analyser, en permanence, l'eau prélevée. Si la qualité de l'eau baisse, on peut modifier la position du tube 110 pour rechercher un niveau ou l'eau est de meilleure qualité. Alternativement, il est possible d'effectuer de temps en temps, un balayage du tube 110 entre les deux positions extrèmes afin de déterminer le niveau ou la qualité de l'eau est la meilleure.

Le dispositif est, de préférence, associé à un dispositif de détection de la position du bras 110 et de la crépine 112 afin de renseigner, en permanence, l'opérateur au poste de commande de la position exacte du tube 110 ou bien pour actionner le vérin 130 de manière à placer le tube 110 dans une position déterminée. Ce dispositif de mesure est basé avantageusement sur le fait que la pression dans l'eau augmente progressivement avec la profondeur. A cet effet, on peut prévoir un capteur de pression disposé à proximité de la crépine 112 sur le tube 110 et un capteur fixe disposé sur la console 114, la lecture de la position étant basée sur la différence de pression indiquée par les deux capteurs.

## Revendications

1. Dispositif de prise d'eau dans un réservoir d'eau naturel ou artificiel, notamment dans le réservoir d'un barrage en vue de la production d'eau potable, comprenant un tube (110) de prise d'eau muni, à une extrémité, d'une crépine d'aspiration (112) et, à l'autre extrémité, d'une branche transversale (116) de façon que ledit tube de prise d'eau ait sensiblement la forme d'un "T", des paliers (118, 120) qui sont solidaires d'une structure portante fixe installée dans le réservoir, lesdits paliers supportant la branche transversale (116) du tube (110) de façon que ce dernier puisse pivoter autour d'un axe horizontal O défini par lesdits paliers (118, 120), un raccord articulé (124, 126) solidaire d'une des deux extrémités de ladite branche transversale (116) pour relier le tube (110) de prise d'eau à une conduite (122) d'évacuation de l'eau, des moyens d'entraînement pour faire pivoter le tube et modifier le niveau de prise d'eau par la crépine caractérisé en ce que ledit dispositif de prise d'eau composé dudit tube (110), desdits paliers (118, 120), dudit raccord articulé (124, 126) et desdits moyens d'entraînement (130), est entièrement immergé dans ledit réservoir d'eau et en ce que lesdits moyens d'entraînement (130) sont actionnés à l'eau.

2. Dispositif selon la revendication 1 caractérisé en ce que lesdits moyens d'entraînement comprennent un vérin (130) actionné à l'eau sous pression et monté entre ladite structure portante (114) et ledit tube (110) de prise d'eau.

3. Dispositif selon la revendication 1 ou 2 caractérisé en ce que lesdits moyens d'entraînement sont commandés à distance à partir d'un poste de commande.

4. Dispositif selon la revendication 3 caractérisé par un dispositif de prélèvement d'échantillons à différentes profondeurs qui peut être commandé à distance.

5. Dispositif selon l'une quelconque des revendications 1 à 4 caractérisé en ce que ladite structure portante installée dans le réservoir est une charpente en acier inoxydable ancrée au fond du réservoir et complètement immergée dans l'eau.

6. Dispositif selon l'une quelconque des revendications 1 à 5 caractérisé en ce que la position de la crépine (112) de prise d'eau est déterminée à l'aide de capteurs de pression.

7. Dispositif selon la revendication 6 caractérisé par un premier capteur de pression monté sur le tube (110) à proximité de la crépine (112) et un second capteur de pression monté sur la structure portante fixe (114).

8. Dispositif selon l'une quelconque des revendications 1 à 7 caractérisé en ce que le tube (110) de prise d'eau est prolongé au-delà de son axe de pivotement O par un contre-poids.

9. Dispositif selon l'une quelconque des revendications 1 à 8 caractérisé en ce que ledit raccord pivotant comprend deux raccords tournants (124, 126) à rotule sphérique, prévus de part et d'autre d'une section de conduite flottante (128) de manière à permettre des déplacements axiaux et radiaux relatifs entre ladite branche transversale (116) et ladite conduite d'évacuation (122).

## Claims

1. Device for water intake in a natural or artificial water reservoir, particularly in a storage reservoir with a view to producing drinking water, comprising a water intake pipe (110) provided, at one end, with a suction strainer (112) and, at the other end, with a transverse branch (116) so that the said water intake pipe has substantially the shape of a "T", bearings (118, 120) which are fixed to a stationary supporting structure installed in the reservoir, the said bearings supporting the transverse branch (116) of the pipe (110) in such a way that the latter can pivot about a horizontal axis O defined by the said bearings (118, 120), an articulated connector (124, 126) fixed to one of the two ends of the said transverse branch (116) for joining the water intake pipe (110) to a water outlet piping (122), driving means for pivoting the pipe and modifying the level of the water intake by the strainer, characterised in that the said water intake device made up of the said pipe (110), the said bearings (118, 120), the said articulated connector (124, 126) and the said driving means (130), is fully submerged in the said water reservoir and in that the said driving means (130) are actuated by water.

2. Device according to Claim 1, characterised in that the said driving means comprise a jack (130) actuated by pressurised water and mounted between the said supporting structure (114) and the said water intake pipe (110).

3. Device according to Claim 1 or 2, characterised in that the said driving means are remotely controlled from a control station.

4. Device according to Claim 3, characterised by a device for sampling at various depths which can be remotely controlled.

5. Device according to any one of Claims 1 to 4, characterised in that the said supporting structure installed in the reservoir is a stainless steel frame anchored to the bottom of the reservoir and completely submerged under water.

6. Device according to any one of Claims 1 to 5, characterised in that the position of the water intake strainer (112) is determined by means of pressure sensors.

7. Device according to Claim 6, characterised by a first pressure sensor mounted on the pipe (110) near the strainer (112) and a second pressure sensor mounted on the stationary supporting structure (114).

8. Device according to any one of Claims 1 to 7, characterised in that water intake pipe (110) is extended beyond its pivoting axis O by a counterweight.

9. Device according to any one of Claims 1 to 8, characterised in that the said pivoting connector comprises two rotating connectors (124, 126) with ball joint, which are provided on either side of a section of floating duct (128) so as to allow relative radial and axial displacements between the said transverse branch (116) and the said outlet piping (122).

## Patentansprüche

1. Vorrichtung zur Wasserentnahme in einem natürlichen oder künstlichen Wasserreservoir, insbesondere in dem Reservoir eines Staudamms, mit dem Ziel der Gewinnung von Trinkwasser, aus einem Wasserentnahmerohr (110), das an einem Ende mit einem Saugkorb (112), und an dem anderen Ende mit einem Querschenkel (116) versehen ist, so daß das Wasserentnahmerohr im wesentlichen die Form eines "T" hat, Lagern (118, 120), die mit einer in dem Reservoir installierten, stationären Tragstruktur fest verbunden sind, wobei diese Lager den Querschenkel (116) des Rohrs (110) so tragen, daß das Rohr um eine horizontale Achse O, die durch die Lager (118, 120) festgelegt wird, schwenkbar ist, einem Gelenk-Anschlußstück (124, 126), das mit einem der zwei Enden des Querschenkels (116) verbunden ist, um das Wasserentnahmerohr (110) mit einer Wasserabführleitung (122) zu verbinden, und Antriebsmitteln, um das Rohr zu schwenken und das Niveau der Wasserentnahme durch den Saugkorb zu ändern, dadurch gekennzeichnet, daß diese Vorrichtung zur Wasserentnahme, die aus dem Rohr (110), den Lagern (118, 120), dem Gelenk-Anschlußstück (124, 126), und den Antriebsmitteln (130) besteht, vollständig in das Wasserreservoir eingetaucht ist, und daß die Antriebsmittel mit Wasser betätigt werden.

2. Vorrichtung gemäß Anspruch 1, dadurch gekennzeichnet, daß die Antriebsmittel einen Hubzylinder (130) umfassen, der mit Druckwasser betätigt wird und zwischen der Tragstruktur (114) und dem Wasserentnahmerohr (110) angebracht ist.

3. Vorrichtung gemäß Anspruch 1 oder 2, dadurch gekennzeichnet, daß die Antriebsmittel von einer Steuerstation aus ferngesteuert werden.

4. Vorrichtung gemäß Anspruch 3, gekennzeichnet durch eine fernsteuerbare Einrichtung zur Probenentnahme in verschiedenen Tiefen.

5. Vorrichtung gemäß irgendeinem der Ansprüche 1 bis 4, dadurch gekennzeichnet, daß die in dem Reservoir installierte Tragstruktur ein Gerüst aus rostfreiem Stahl ist, das auf dem Boden des Reservoirs verankert ist und vollständig in das Wasser eingetaucht ist.

6. Vorrichtung gemäß irgendeinem der Ansprüche 1 bis 5, dadurch gekennzeichnet, daß die Position des Wasserentnahme-Saugkorbs (112) mit Hilfe von Druckfühlern bestimmt wird.

7. Vorrichtung gemäß Anspruch 6, gekennzeichnet durch einen ersten Druckfühler, der auf dem Rohr (110) in der Nähe des Saugkorbs (112) angebracht ist, und einen zweiten Druckfühler, der auf der stationären Tragstruktur (114) angebracht ist.

8. Vorrichtung gemäß irgendeinem der Ansprüche 1 bis 7, dadurch gekennzeichnet, daß das Wasserentnahmerohr (110) durch ein Gegengewicht bis über seine Schwenkachse O hinaus verlängert ist.

9. Vorrichtung gemäß irgendeinem der Ansprüche 1 bis 8, dadurch gekennzeichnet, daß dieses Gelenk-Ansatzstück zwei Kugelgelenk-Drehanschlüsse (124, 126) umfaßt, die auf beiden Seiten eines schwimmenden Abschnitts (128) vorgesehen sind, so daß axiale und radiale relative Verschiebungen zwischen dem Querschenkel (116) und der Abführrohrleitung (122) möglich sind.
